# EUROPEAN PATENT APPLICATION

(11) **EP 2 048 756 A2**
(43) Date of publication of application: **15.04.2009**
(21) Application number: 08017364.4
(22) Date of filing: 02.10.2008
(51) Int. Cl.: H02J 1/10, H02J 7/34

(54) **Uninterruptible power supply**

(30) Priority: 03.10.2007 JP 2007260185
(71) Applicant: Densei Lambda K.K., Tokyo 141-0022 (JP)
(72) Inventor: Soeda, Kouichi, Tokyo 141-0022 (JP); Okano, Kouji, Tokyo 141-0022 (JP); Kishimoto, Eigo, Tokyo 141-0022 (JP); Hashimoto, Takeshi, Tokyo 141-0022 (JP)
(74) Representative: Schäfer, Matthias W.

(57) **Abstract**

The invention is to provide an uninterruptible power supply that is able to response to diverse output specifications of DC power source units while avoiding increase of numbers of models. DC power source units 30-1 and 30-2 are placed in a container different from other container that contains an AC power source unit 20 and the AC power source unit and the DC power source unit are detachable. Further, the DC power source units 30-1 and 30-2 is provided with a setting unit that sets a condition for starting power supply in response to outside operation.

## Description

The present invention relates to an uninterruptible power supply, including both an alternating-current (AC) power source unit and a direct-current (DC) power source unit and supplying an AC power or a DC power at the time of power interruption.

An uninterruptible power supply (abbreviated as UPS hereafter) for supplying electric power at the time of power interruption is widely utilized. In a computer system in particular, it is necessary to place a backup power source such as UPS in order to avoid a system's crash at the time of power interruption. Various kinds of UPS are prepared for electric apparatuses that need a backup power source. As an example of UPS, there is a model of a single unit that works as both AC and DC power source portions so as to handle both one electric apparatus, needing an AC power source, and the other electric apparatus, needing a DC power source.

JP-B-H1-30378 (the patent document 1) and JP-A-2004-40867 (the patent document 2) disclose such UPS technology of supplying a commercial power at the time of detecting a voltage of a commercial power source and a DC power at the time of power interruption.

UPS, including both AC and DC power source portions shown in the patent document 1, however, must respond to diverse requests of specifications regarding a DC power source portion, causing a problem in that a manufacturer has to manufacture varieties of many models and stock them, reducing production efficiency and inventory- management efficiency. On the other hand, a user has to purchase diverse models and manage them, facing a problem in that economic efficiency and maintenance- management efficiency are lowered.

Namely, any one of a few output voltages such as 100 V and 200 V in Japan is required in a specification for an AC power source portion. But, a specification for DC power source portion requires varieties of outputs such as 1.5V, 3V, 5V, 6V, 12V, and 24V Hence, such varieties of output specifications of DC power source units are a main cause of increasing numbers of models.

In order to overcome the above issues, the present invention is to provide UPS that handles diverse output specifications regarding DC power source units while avoiding increasing numbers of models.

According to an aspect of the invention, an uninterruptible power supply comprises: an AC power source unit supplying AC power to a load; and a DC power source unit supplying DC power to a load. The DC power source unit is placed in a container different from other container that contains the AC power source unit and the AC power source unit and the DC power source unit are detachable together.

According to this aspect, the DC power source unit can be affixed to the AC power source unit later in response to a user's request. This affixture provides a manufacturer an advantage in that small numbers of models for AC power source units are prepared, DC power source units are placed to these models later in response to a use's request, and then these are shipped. This advantage enhances production efficiency and inventory management efficiency.

Further, a user has an advantage in that he/she purchases small numbers of models for an AC power source unit and purchases a DC power source unit later if it is necessary, enhancing economic efficiency and maintenance- management efficiency.

Further, the DC power source unit may be provided with a setting unit that sets a condition for starting power supply in response to an outside operation. This setting can make a single DC power source unit correspond to diverse specifications, efficiently solving the above mentioned issues.

Further, the DC power source unit may be provided with a setting unit that sets a condition for starting power supply and the setting unit may include a DC/DC conversion circuit and an output voltage setting unit. The output voltage setting unit may control output voltage of the DC/DC conversion circuit depending on signals outputting from a controller. These additional circuit and unit automatically control output voltage, further enhancing user's conveniences.

According to the above aspect of the invention, a new UPS can response to diverse output specifications of DC power source units while avoiding increase of numbers of models.

Specific embodiments of the present invention will now be described, by way of example only, with reference to the accompanying drawings in which:
Fig. 1 is a schematic view of UPS in a first exemplary embodiment;
Fig.2 is a structural view of a DC power source unit in UPS of the first exemplary embodiment;
Fig.3 is a schematic view of UPS in a second exemplary embodiment;
Fig.4 is a structural view of a DC power source unit in UPS of the second exemplary embodiment;
Fig.5 is a schematic view of a third exemplary embodiment;
Fig.6 is a structural view of a DC power source unit in the third exemplary embodiment; and
Fig.7 is a flow chart showing an operation of a delay- time setting unit.

### [First exemplary embodiment]

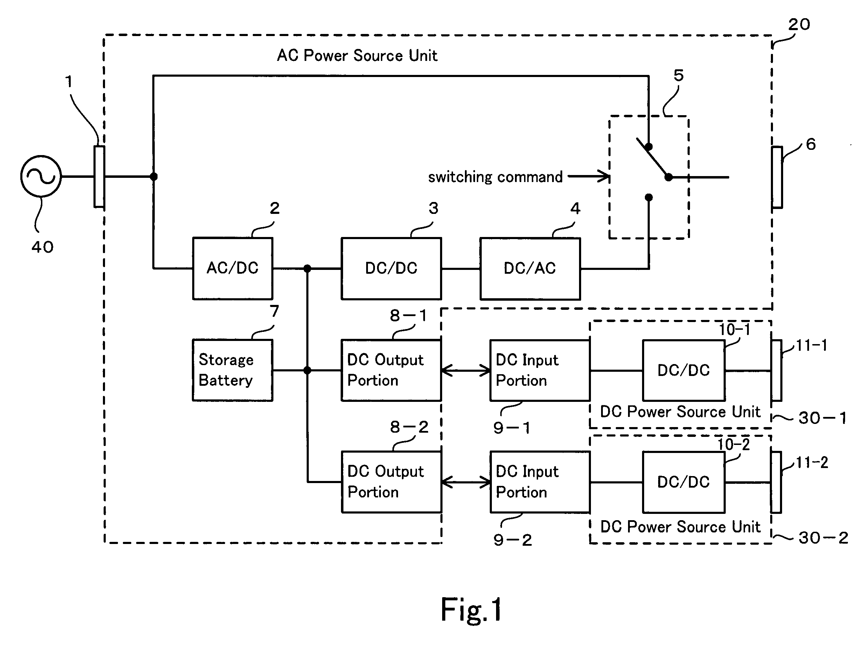

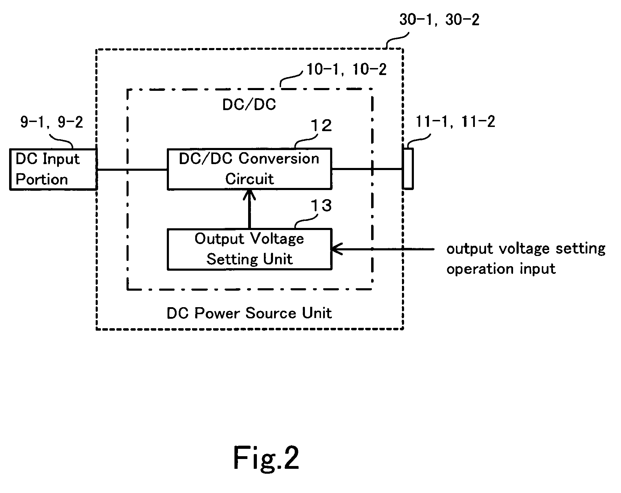

UPS in a first exemplary embodiment will be explained with referring to Fig.1 and Fig.2. Fig.1 is a schematic view of UPS in the first exemplary embodiment. Fig.2 is a structural view of a DC power source unit in UPS of the first exemplary embodiment.

UPS of the first exemplary embodiment comprises an AC power source unit 20, a DC power source unit 30-1 and a DC power source unit 30-2. The DC power source unit 30-1 and the DC power source unit 30-2 are placed in a container different from other container containing the AC power source unit 20. The AC power source unit 20, the DC power source unit 30-1 and the DC power source unit 30-2 are formed as detachable.

Namely, according to UPS of the exemplary embodiment, an AC input unit 1 is connected to an AC power source unit 40. An AC current of the AC power source unit 40 is converted to a DC current by an AC/DC converter 2 and stored in a storage battery 7 at normal time (non power interruption.) Further, when performing a maintenance for internal units in UPS for example in normal time, a switching unit 5 connects a AC output unit 6 directly to the AC input unit 1, outputting an AC current of the AC power source unit 40 to the AC output unit 6.

At the time of power interruption, the switching unit 5 connects the AC output unit 6 to a DC/AC converter 4, enabling a DC/DC converter 3 to convert the DC current in the storage battery 7 into a predetermined voltage value. Then the DC/AC converter 4 converts it into an AC current and outputs the current to the AC output unit 6. Here, a controller, detecting power interruption and commanding the switching unit 5 to switch, is omitted in the drawing.

DC input portions 9-1 and 9-2 of DC power source units 30-1 and 30-2 are detachably connected to DC output portions 8-1 and 8-2 of the AC power source unit 20. Depending on a user's request, either of DC power source units 30-1 or 30-2 may be detachably connected to the AC power source unit 20. Otherwise, both of DC power source units 30-1 and 30-2 may be detachably connected to the AC power source unit 20.

By connecting DC input portions 9-1 and 9-2 of DC power source units 30-1 and 30-2 to DC output portions 8-1 and 8-2, DC/DC converters 10-1 and 10-2 convert the DC current in the storage battery 7 into a predetermined voltage value and output the predetermined voltage value to DC output portions 11-1 and 11-2.

DC/DC converters 10-1 and 10-2 of DC power source units 30-1 and 30-2 are provided with a DC/DC conversion circuit 12 and an output voltage setting unit 13, as shown in Fig.2. The output voltage setting unit 13 corresponds to a setting unit which controls the DC/DC conversion circuit 12 to have an output voltage set by inputting the output voltage operation. Here, DC/DC converters 10-1 and 10-2 may utilize various control methods such as a PWM method, a VFM method and the like.

For example, a setting switch such as a dip switch may be placed in the output voltage setting unit 13. A user may change the setting of the switch, setting an arbitrary voltage value. Otherwise, a simple computer function (a controller) may be placed in the output voltage setting unit 13. A user may input electrical signals to the function, commanding it to output an arbitrary voltage value. This installation sets output voltage values for the DC power source unit 30-1 and DC power source unit 30-2 separately. Here the above controller may be the same of a control function, commanding the switching unit 5 to switch.

### [Second exemplary embodiment]

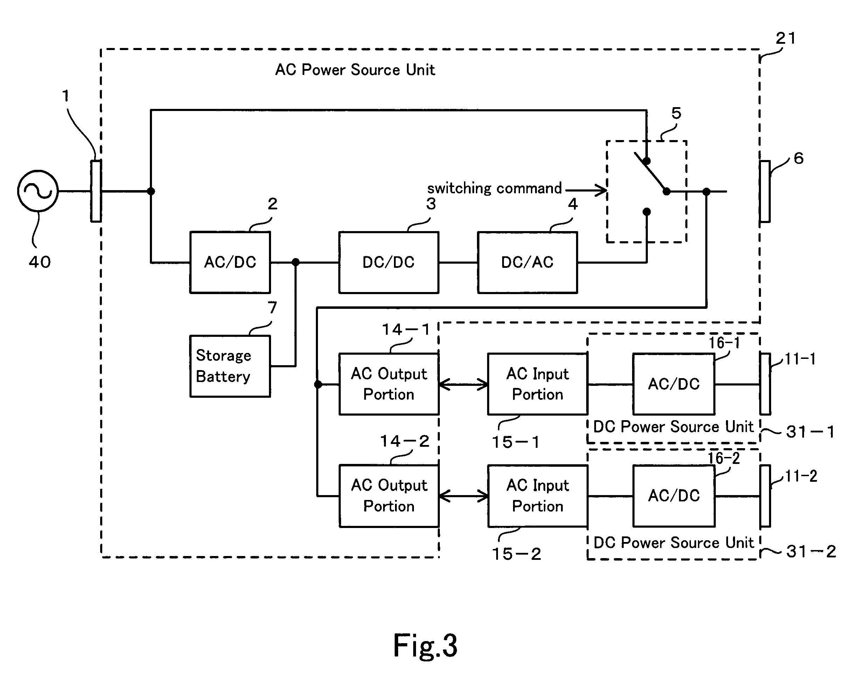

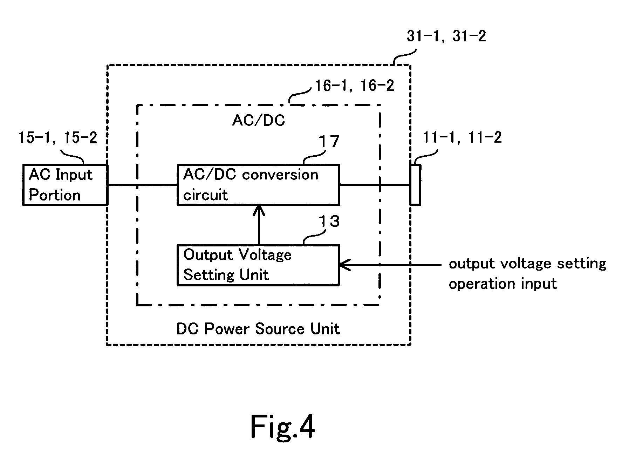

UPS in the second exemplary embodiment will be explained with referring to Fig.3 and Fig.4. Fig.3 is a schematic view of UPS in the second exemplary embodiment. Fig.4 is a structural view of a DC power source unit in UPS of the second exemplary embodiment. Here, the same numerical references are applied to the same constituents in the first exemplary embodiments.

In the first exemplary embodiment, DC power source units 30-1 and 30-2 output the DC current by using the DC current in the storage battery 7. On the other hand, in the second exemplary embodiment, DC power source units 31-1 and 31-2 output a DC current by using an AC current output by the AC output unit 6. Namely, the AC current, branched between the switching unit 5 and the AC output unit 6, is output to the AC output portions 14-1 and 14-2.

AC input units 15-1 and 15-2 of DC power source units 31-1 and 31-2 are detachably connected to AC output portions 14-1 and 14-2 of the AC power source unit 21. Depending on a user's request, either of DC power source units 31-1 or 31-2 may be detachably connected to the AC power source unit 21. Otherwise, both of DC power source units 31-1 and 31-2 may be detachably connected to the AC power source unit 21.

By connecting AC input units 15-1 and 15-2 of DC power source units 31-1 and 31-2 to AC output portions 14-1 and 14-2, AC/DC converters 16-1 and 16-2 converts the AC current branched between the switching unit 5 and the AC output unit 6, into a DC current and then, converts the current into a predetermined voltage value. The predetermined voltage value is output to the DC output portions 11-1 and 11-2.

AC/DC converters 16-1 and 16-2 of DC power source units 31-1 and 31-2 are provided with an AC/DC conversion circuit 17 and the output voltage setting unit 13, as shown in Fig. 4. The output voltage setting unit 13 controls the AC/DC conversion circuit 17 to have an output voltage set by the operation of output voltage setting. The above mentioned explanation in the first exemplary embodiment is also applied to the second exemplary embodiment more than the above mentioned approach in the second exemplary embodiment.

### [Third exemplary embodiment]

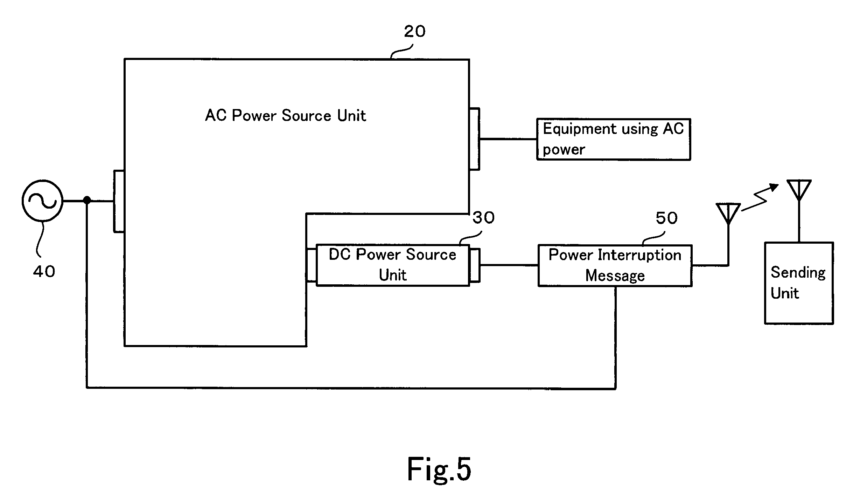

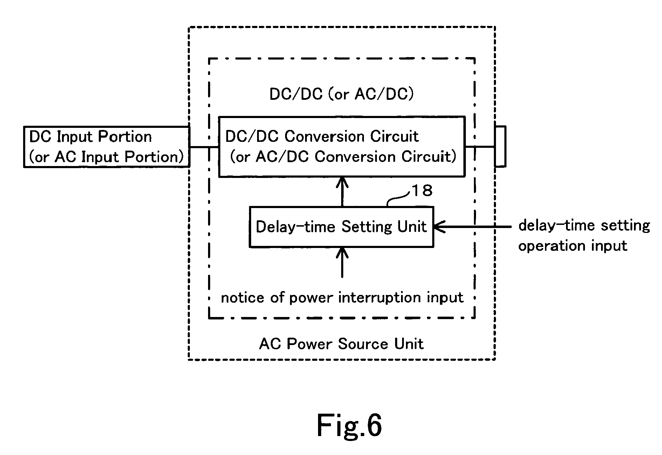

The third exemplary embodiment will be explained, with referring to Fig.5 and Fig.6. Fig.5 is a schematic view of the third exemplary embodiment. Fig.6 is a structural view of a DC power source unit in the third exemplary embodiment.

In first and second exemplary embodiments, the output voltage setting unit 13 is placed and a user sets a desirable output voltage value to DC power source units 30-1, 30-2, 31-1 and 31-2 by inputting the output voltage operation. But, in the third exemplary embodiment, other control function( or a controller) instead of the output voltage setting unit 13 is placed, making it possible for a user to perform desirable setting more than set the output voltage value to an arbitrary value.

For example, as shown in Fig.5, a power interruption message sending unit 50, detecting power interruption and automatically sending the message to a manager located far away from the location of the unit, is connected to the DC power source unit 30. In such case, when it takes long time to continue the power interruption, a user may request to avoid unnecessary continuation of automatically sending the message. The above function of the exemplary embodiment is capable of operating cutoff of the DC output at the time when the set time elapsed after power interruption, responding such user's request and avoiding unnecessary continuation.

Namely, in the third exemplary embodiment, a delay-time setting unit 18 is placed instead of the output voltage setting unit 13 in first and second exemplary embodiments. A user inputs an operation of setting delay time and sets desirable time of the continuation of sending the power interruption message after power interruption is happened. The delay-time setting unit 18 receives a notice of power interruption from a control function not shown in the drawing (or a controller), commanding the switching unit 5 to switch.

Here, the delay-time setting unit 18 may also function as the output voltage setting unit 13. Otherwise, both the delay-time setting unit 18 and the output voltage setting unit 13 may be placed together. Such placement brings the power interruption message sending unit 50 to be driven with an arbitrary voltage.

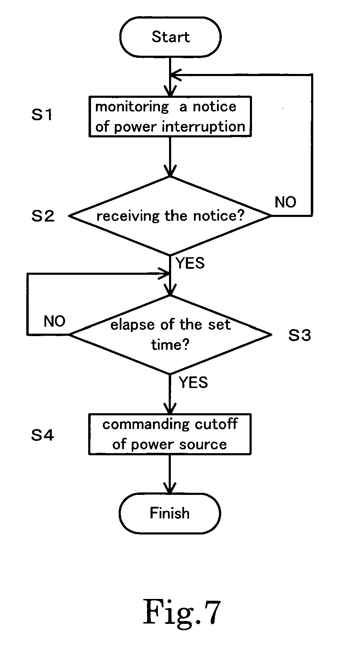

Fig.7 is a flow chart of the operation of the delay-time setting unit 18. The delay-time setting unit 18 monitors a notice of power interruption (S1), receives the notice (S2), waits for the elapse of the set time (S3) and cutoffs a power source directly after the set time elapsed (S4).

Further, in the above-mentioned second exemplary embodiment, AC output portions 14-1 and 14-2 may be electrically conductive with AC input units 15-1 and 15-2 without being contacted each other. For example, a transformer may be placed between AC output portions 14-1 and 14-2, and AC input units 15-1 and 15-2. This placement brings an AC current to be transferred from output units 14-1 and 14-2 to AC input units 15-1 and 15-2 through electromagnetic induction. Further, such placement remarkably brings a workload of electrical wiring to be reduced, making it extremely easy to set the DC current power sources 31-1 and 31-2.

Here, the numbers of installing DC output portions 8-1 and 8-2, DC power source units 30-1 and 30-2, AC output portions 14-1 and 14-2, and DC power source units 31-1 and 31-2 are not limited to two, may be one, or equal to or more than three.

Further, a user may set an output voltage of the output voltage setting unit 13 by manipulating an operational panel and the like, provided in UPS. Here the operational panel may include a means such as a lamp or a liquid crystal display, visibly indicating a current status (a connection situation) of setting DC power source units 30-1, 30-2, 31-1 and 31-2. Further, a switching unit, similar to the switching unit 5, may be placed near to DC output portions 11-1 and 11-2 in DC power source units 30-1, 30-2, 31-1 and 31-2. The switching unit may control output or cutoff of the DC current from DC power source units 30-1, 30-2, 31-1 and 31-2, based on switching command from the control function (or a controller.) In such case, a communication unit, sending and receiving a massage with a wire or wireless, may be placed in the control function (or a controller), remote-controlling output or cutoff of the DC current.

Further, the AC power source unit 20 shown in Fig.1 may be substituted with DC power source units 30-1 and 30-2 at the time of a maintenance. For example, in a case of connecting a plurality of UPS shown in Fig.1, a serial or parallel switching circuit may be placed and switch one of the following two connection modes. Namely, one is that pluralities of UPSs are connected in parallel. The other is that the AC power source unit 20 of a specified UPS is connected to other UPSs in series.

Further, a detecting unit, detecting a potential difference between two output wires extending from DC output portions 11-1 and 11-2 may be placed and output detecting signals to the controller. The controller may automatically set the output voltage of the output voltage setting unit 13, based on the detecting signals from the detecting unit. In this case, a target potential difference may be set in advance. The controller may automatically follow-up the target potential difference by using a method such as a P control, a PI control, a PD control, a PID control and the like.

## Claims

1. A uninterruptible power supply comprises:
an AC power source unit supplying a AC power to a load; and
a DC power source unit supplying a DC power to a load, wherein
the DC power source unit is placed in a container different from other container that contains the AC power source unit and the AC power source unit and the DC power source unit are detachable together.

2. The uninterruptible power supply according to claim 1, wherein
the DC power source unit is provided with a setting unit that sets a condition for starting power supply in response to outside operation.

3. The uninterruptible power supply according to claim 2,wherein
the DC power source unit further comprises the setting unit for setting a condition of starting power supply, and the setting unit comprises a DC/DC conversion circuit and an output voltage setting unit, wherein
the output voltage setting unit controls an output voltage of the DC/DC conversion circuit, based on signals output from a controller.
